## Europäisches Patentamt

## European Patent Office

## Office européen des brevets

(19)

(11) Numéro de publication: **0 204 627**
**B1**

(12) **FASCICULE DE BREVET EUROPEEN**

(45) Date de publication du fascicule du brevet:
26.07.89

(21) Numéro de dépôt: **86401159.8**

(22) Date de dépôt: **30.05.86**

(51) Int. Cl.⁴: **C 03 B 27/04**

(54) **Perfectionnement à la trempe du verre à l'aide d'un gaz.**

(30) Priorité: **30.05.85 FR 8508096**

(43) Date de publication de la demande:
**10.12.86 Bulletin 86/50**

(45) Mention de la délivrance du brevet:
**26.07.89 Bulletin 89/30**

(84) Etats contractants désignés:
**BE CH DE FR GB IT LI SE**

(56) Documents cités:
**FR-A- 834 514**
**FR-A- 2 291 387**

(73) Titulaire: **SAINT-GOBAIN VITRAGE, Les
Miroirs 18, avenue d'Alsace, F-92400 Courbevoie (FR)**

(72) Inventeur: **Colmon, Daniel, 8, rue François Mauriac,
F-95130 Franconville (FR)**
Inventeur: **Letemps, Bernard, 5, avenue du Gros
Buisson, F-60150 Thourotte (FR)**

(74) Mandataire: **Leconte, Jean-Gérard et al, Saint-Gobain
Recherche 39, Quai Lucien Lefranc,
F-93304 Aubervilliers Cedex (FR)**

## Description

La présente invention concerne la trempe du verre par des jets gazeux d'un fluide de refroidissement qui la plupart du temps est de l'air.

Il est connu pour obtenir une trempe sans marquage de volumes de verre, par soufflage d'un gaz de refroidissement, de déplacer relativement l'un à l'autre, lesdits volumes de verre et les organes de soufflage.

Dans le cas de la trempe horizontale, c'est à dire dans le cas où les volumes de verre sont disposés horizontalement, les organes de soufflage sont généralement fixes alors que les volumes de verre défilent; dans le cas de la trempe verticale on peut avoir une oscillation aussi bien des organes de soufflage que des volumes de verre.

Ce déplacement relatif du verre et des organes de soufflage est mentionné, notamment dans les publications françaises de brevet 2 547 575, 1 133 039, 1 158 738, 1 476 785.

Dans de telles conditions, il est possible de tremper des volumes de verre légèrement bombés, mais lorsqu'on est en présence de volumes de verre bombés profondément et/ou à courbures multiples suivant des directions différentes, tels des demi-sphères, tout mouvement relatif des volumes de verre et des organes de soufflage les uns par rapport aux autres est impossible, sauf à écarter beaucoup les volumes de verre des organes de soufflage, mais dans ce cas, les pressions de soufflage nécessaires sont trop élevée d'une part et les variations d'écart entre le verre et les moyens de soufflage varient trop pour que la trempe soit homogène d'autre part.

Par ailleurs, tout déplacement soit du verre, soit de moyens de soufflage ne peut se faire que avec une fréquence relativement réduite et la qualité de la trempe augmente avec la fréquence du déplacement relativ du verre et des moyens de soufflage.

Il avait déjà été proposé pour tenter de résoudre le problème de la fréquence du déplacement relatif du verre et des moyens de soufflage, d'alléger les moyens de soufflage mis en oscillation en n'entraînant en oscillation que les busettes de soufflage (publication française de brevet 1 550 733). Mais il subsiste toujours un mouvement d'organes mécaniques qui limite la fréquence des oscillations d'une part, et le problème de l'impossibilité du mouvement relativ du verre et des organes de soufflage les un par rapport aux autres pour des volumes de verre fortement bombés et à courbures multiples n'est pas résolu.

Il avait également été proposé dans le brevet français 834514 de faire varier pendant le refroidissement du verre en vue de sa trempe, soit la position des zones de refroidissement, soit leur intensité d'action, soit encore à la fois ces deux facteurs, en faisant interagir à leur sortie de leur tuyère respective, deux ou plusieurs jets dont on variait le débit en fonction du temps.

Ceci semble à priori pouvoir résoudre les problèmes que posent les mouvements des moyens de soufflage et/ou les oscillations des vitrages face à ces moyens, or ce n'est pas le cas.

En effet, la multiplication du nombre de tuyères en vue d'obtenir une interaction des jets qui en sortent, crée un encombrement qui gène l'échappement de l'air de trempe et donc qui réduit de façon importante son efficacité. En outre, cette technique nécessite des moyens de soufflage particuliers, en l'occurance des tuyères, et des débits de pression importants pour chacune de ces tuyères, d'où un coût en matériel et un coût de fonctionnement, relativement élevés.

La présent invention vise à permettre le déplacement par rapport aux volumes de verre, des jets de fluide gazeux soufflés sur lesdits volumes, à une fréquence élevée sans qu'il y ait de heurts entre le verre et les organes de soufflage fournissant ces jets, lorsque les volumes de verre sont bombés profondément et à courbures multiples, sans pour autant altérer les possibilités d'échappement du fluide gazeux après qu'il ait été soufflé sur le verre, sans pour autant également entraîner des coûts prohibitifs.

Elle vise en particulier à réaliser ce déplacement des jets de façon rapide et sans mouvement des organes mécaniques, buses au caissons de soufflage qui les produisent.

Elle vise également à permettre des modifications aisées de l'ensemble de soufflage lorsqu'on veut changer les conditions de trempe ou lorsque le modèle des volumes de verre varie.

Pour celà elle propose un procédé de trempe de volumes de verre à l'aide d'un fluide de refroidissement gazeux, notamment de l'air, distribué en jets, caractérisé en ce qu'on modifie cycliquement l'impact des jets sur le verre grâce à des perturbations auxquelles on soumet le fluide destiné à former chacun des jets qu'on veut modifier, ces perturbations intervenant en amont de la libération des jets.

Selon un premier mode de réalisation ces perturbations sont constituées par au moins un courant gazeux secondaire de commande qui interfère avec le fluide de refroidissement destiné à former le jets sur lequel on veut agir et dont on modifie cycliquement l'interférence avec ledit fluide.

Dans certains cas, le courant gazeux secondaire de commande est en courant latéral et radial par rapport à la direction du fluide de refroidissement destiné à former chaque jet.

Dans d'autres cas, ce courant gazeux secondaire de commande est lateral et tangentiel par rapport à la direction du fluide de refroidissement destiné à former chaque jet.

Dans d'autres cas encore, au moins un courant gazeux secondaire de chaque type, c'est à dire radial et tangentiel, est associé à un jet de fluide de refroidissement.

Dans la mesure où plusieurs courants gazeux secondaires sont associés à un même jet de fluide de refroidissement lesdits courants gazeux secondaires sont mis en action de façon à interférer avec le jet de fluide de refroidissement, individuellement les uns après les autres, ou en groupe, les différents groupeś les uns après les autres.

Dans un second mode de réalisation, ces perturbations sont crées grâce à des obstacles que l'on dispose sur le trajet soit du jet principal de trempe lui-même, soit d'un courant gazeux secondaire arrivant latéralement et tangentiellement par rapport audit jet et interférant avec ledit jet, et simultanément les caractéristiques de pression, vitesse et/ou débit du jet ou du courant gazeux secondaire varient cycliquement.

L'invention propose également des dispoditifs pour tremper le verre en modifiant l'impact d'un jet ou des jets de trempe sur le verre, comme décrit précédemment. Ces dispositifs sont définis dans les revendications 7 à 14.

L'invention sera maintenant décrite plus en détail en se référant aux figures jointes qui représentent:

fig. 1 un schéma d'une installation de trempe du verre par soufflage d'un fluide gazeux,

fig. 2 un schéma d'une buse de soufflage tubulaire commandée par des courants gazeux radiaux,

fig. 2A en vue de profil,

fig. 2B en vue de dessus,

fig. 2C en perspective avec illustration de l'impact sur le verre,

fig. 3 un schéma d'une buse de soufflage tubulaire commandée par des courants gazeux tangentiels,

fig. 3A en vue de profil,

fig. 3B en vue de dessus,

fig. 3C en perspective avec illustration de l'impact sur le verre,

fig. 4 un schéma illustrant le fonctionnement d'une buse commandée par des courants radiaux ou tangentiels qui varient cycliquement,

fig. 5 un schéma d'alimentation et de commande simultanée de toute une série de buses, chaque buse recevant une pluralité de courants gazeux radiaux et/ou tangentiels,

fig. 6 un schéma d'obstacles mécaniques interposés sur le trajet des courants gazeux secondaires en vue de perturber le jet principal pour obtenir un impact variable cycliquement,

fig. 7 un schéma d'obstacles mécaniques disposés sur le trajet du jet principal en vue de le perturber pour obtenir un impact variable cycliquement.

Ainsi qu'il est connu, une installation de trempe de volumes de verre 1 comprend des organes de soufflage A constitués essentiellement de buses 2 par exemple simplement tubulaires et de caissons 3 d'alimentation de ces buses 2 en gaz sous pression, la plupart du temps de l'air, et des moyens B pour maintenir, supporter et/ou faire défiler les volumes de verre 1 face aux buses 2.

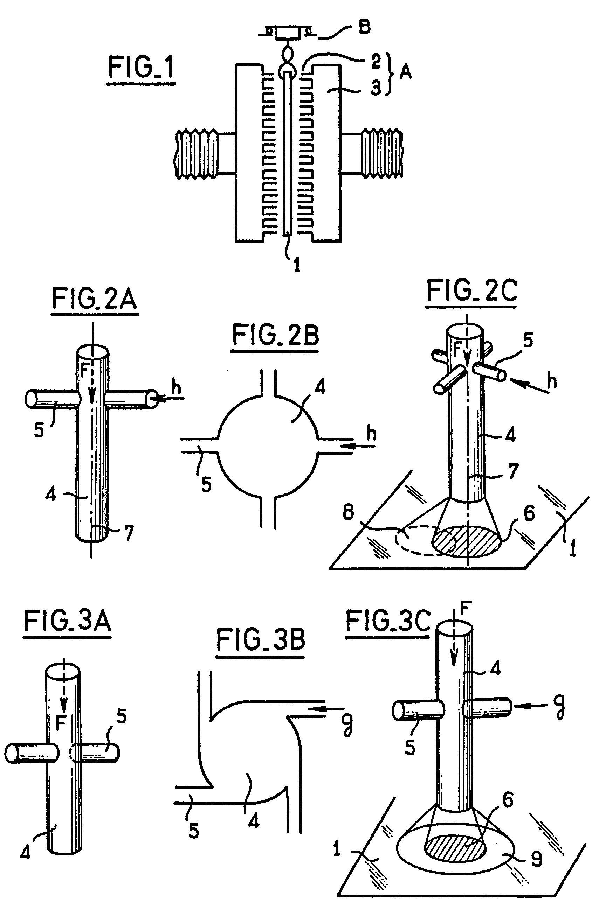

Pour souffler le gaz de trempe sur le verre, l'invention propose dans un premier mode de réalisation d'employer des buses du type de celles montrées sur les figures 2 et 3, c'est à dire ayant une tubulure principale 4 munie en amont de son extrémité d'au moins une conduite latérale 5 et en général une pluralité de telles conduites, par exemple quatre, alimentée elle aussi en gaz sous pression, le jet secondaire formé par ce gaz sous pression et véhiculé par chaque conduite latérale 5, interférant avec le fluide destiné à former le jet principal transporté par chaque tubulure principale 4 et servant à le commander, c'est à dire à modifier son orientation et/ou son impact sur le verre.

Les conduites latérales 5 peuvent être radiales comme montré sur les figures 2 et par exemple si elles sont au nombre de quatre par tubulure principale 4, disposées à 90° les unes des autres, ou tangentielles comme montré sur les figures 3 et par exemple également disposées à 90° les unes des autres.

Lorsque le jet principal est alimenté, en l'absence d'un jet secondaire de commande, il produit un impact 6 sur le verre, centré sur l'axe 7 de la tubulure principale 4 et du jet principal qu'elle délivre. Lorsqu'au moins une conduite latérale 5 est alimentée par un courant secondaire de gaz, les deux flux gazeux se combinent de sorte que le jet résultant est dévié et que son impact sur le verre est différent de ce qu'il était en l'absence de courant secondaire. Ainsi, par exemple dans le cas de conduites latérales 5 radiales, illustré par les figures 2, lorsqu'un courant de gaz est envoyé dans la tubulure principale 4 suivant la flèche F et dans une des conduites latérales 5 suivant la flèche h, l'impact 8 sur le verre du jet combiné est déplacé par rapport à l'impact 6 obtenu en l'absence du jet secondaire, dans le sens de la flèche h comme montré figure 2C.

Dans le cas de conduites latérales 5 tangentielles illustré par les figures 3, lorsqu'un courant de gaz est envoyé dans la tubulure principale 4 suivant la flèche F et dans au moins une des conduites latérales tangentielles selon la flèche g, l'impact 9 sur le verre 1 du jet combiné est plus étendu que l'impact 6 obtenu en l'absence de jet secondaire (figure 3C), l'importance de l'extension étant fonction de l'importance de l'impulsion tangentielle du ou des jets secondaires tangentiels.

Plusieurs conduites latérales 5 soit radiales soit tangentielles peuvent être alimentées simultanément; l'impact sur le verre du jet combiné est alors déterminé par la résultante des impulsions, axiale du jet principal et latérale (radiales ou tangentielles) des jets secondaires.

Egalement, des conduites latérales 5, radiales d'une part et tangentielles d'autre part, peuvent être associées à une même tubulure principale 4, lesdits conduites latérales 5 pouvant être alimentées successivement ou plusieurs d'entre elles pouvant être alimentées simultanément. Dans la mesure où sont alimentées simultanément des conduites radiale(s) et tangentielle(s), l'impact sur le verre est non seulement décalé, mais également agrandi par rapport à l'impact d'un jet principal seul.

Les conduites latérales débouchent de préférence dans une partie rectiligne de la tubulure principale 4, de façon à ne pas altérer et compliquer l'effet des jets secondaires en lui superposant des effets parasites dûs à une courbure de la tubulure principale 4. De préférence également, ces conduites latérales dans la tubulure principale suffisamment à proximité de sa sortie, de façon que l'effet des jets secondaires ne soit pas épuisé à la sorte de la tubulure principale 4. L'effet des jets secondaires sera d'autant plus marqué que, toutes choses égales par ailleurs, l'arrivée des conduites latérales sera plus proche de la sortie de la tubulure principale 4. Un jet secondaire aura également d'autant plus d'effet que son impulsion sera plus grande, comparée à celle du jet principal, c'est à dire que sa pression, sa vitesse, son débit seront plus importants. Cette pression, cette vitesse, ce débit dépendront de la source de gaz sous pression, en général de l'air, de la section des conduites secondaires, du réglage de l'éventuel détendeur monté sur lesdites conduites secondaires.

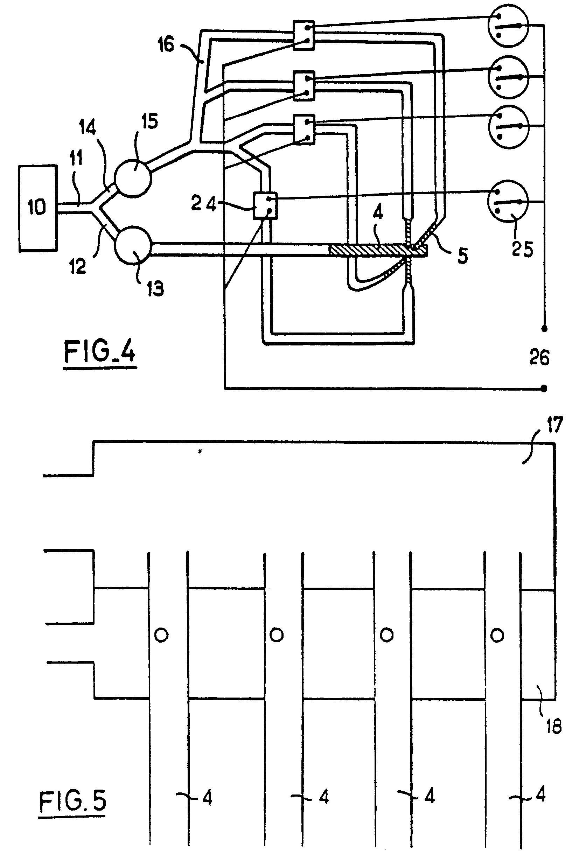

La perturbation cyclique du jet principal introduite par les jets secondaires pourra être réalisée comme illustré par la figure 4 sur laquelle sont prévues quatre conduites latérales 5 associées à une seule et même tubulure principale 4.

Sur cette figure 4 est montrée une tubulure principale 4 de buse utilisée pour la trempe du verre, cette tubulure principale 4 recevant à proximité de son extrémité de sortie quatre conduites latérales secondaires 5. Cet ensemble est alimenté en air comprimé par une source 10 d'air comprimé unique, la tuyauterie 11 issue de ladite source se subdivisant de façon à alimenter la tubulure principale 4 ainsi que les quatre conduites latérales 5.

A la suite d'une première subdivision, une branche 12 de la tuyauterie 11 subdivisée, équipée d'un détendeur 13, est branchée sur la tubulure principale 4, tandis qu'une seconde branche 14 également équipée d'un détendeur 15, se subdivise à nouveau plusieurs fois pour donner quatre ramifications telles que 16, chacune équipée d'une électro-vanne 24, pour alimenter les quatre conduites latérales 5. L'ouverture et la fermeture de chaque électro-vanne 24 sont commandées par un moteur entraînant un arbre à cames (non figurés), les cames agissant sur des micro-contacts électriques tels que 25 qui règlent la distribution du courant électrique provenant d'une source électrique 26, dans les électro-vannes 24 et en conséquence qui règlent la marche des électro-vannes 24.

Les perturbations apportées au jet principal par les courants latéraux secondaires peuvent être équivalentes, ou au contraire différentes les unes des autres. Pour les différencier, on peut jouer sur la section de chaque ramification 16, sur le réglage de chaque électro-vanne, sur le moment d'ouverture des électro-vannes déterminé par l'angle d'ouverture de la came qui lui est associée, sur le niveau par rapport à l'extrémité de la tubulure principale 4 auquel débouche chaque conduite latérale 5, sur la façon dont débouche chaque conduite latérale 5 (radiale, tangentielle, et en général angle par rapport au jet principal).

Dans la mesure où chaque courant secondaire est équivalent, on peut encore moduler la perturbation apportée par chaque courant secondaire en agissant sur le réglage relatif des deux détendeurs 13 et 15, sur la section des branches 12 et ramifications 16 de la tuyauterie 11, sur les temps, l'ordre, le degré et le décalage d'ouverture des électro-vannes, sur le nombre de conduites latérales 5 et leur disposition par rapport à la tubulure principale 5.

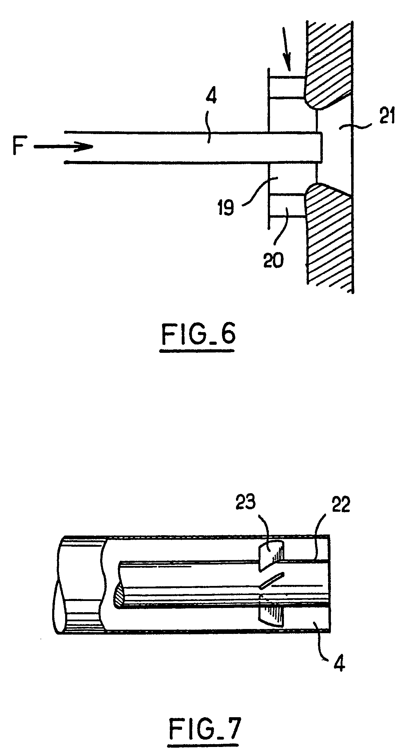

Pour alimenter chaque buse en jet principal et en courants secondaires on peut pratiquer comme décrit précédemment, c'est à dire prévoir des tuyauteries 11, branches 12 et ramifications 16, par exemple à l'aide de tubes en plastique souples. Cependant lorsque dans un poste de trempe le nombre de buses est important, il peut être préférable d'employer le mode d'alimentation des tubulures principales 4 et des conduites latérales 5 décrit ci-après en relation avec la figure 5.

Toutes les tubulures principales 4 qu'on veut alimenter de façon identique, prennent naissance dans un même caisson 17 alimenté en gaz sous pression, notamment de l'air. Elles traversent ensuite un ou successivement plusieurs autres caissons secondaires tels que 18 d'alimentation en courants secondaires, le nombre de caissons secondaires étant égal au nombre de conduites latérales secondaires 5, prévues sur chaque buse de soufflage et fonctionnant de manière indépendante.

Ainsi à supposer que l'on désire soumettre les jets principaux à quatre perturbations successives grâce à quatre courants latéraux secondaires différents, on prévoiera quatre caissons secondaires 18.

Chaque caisson secondaire 18 est en communication avec la ou les conduites latérales 5 de chaque buse de soufflage, destinées à être alimentées simultanément et dans les mêmes conditions. L'alimentation de chaque caisson secondaire 18 est réglée à l'aide d'un ensemble électro-vanne, micro-contact, came montée sur un arbre entraîné par un moteur, cet ensemble n'étant pas représenté sur la figure 5.

La totalité des conduites secondaires peut être alimentée par le système de caissons avec l'alimentation cyclique, décrit précédemment, ou l'alimentation desdites conduites secondaires peut être mixte, c'est à dire que parmi les différents groupes de conduites secondaires 5, chaque groupe comportant des conduites destinées à être alimentées en même temps et dans les mêmes conditions, peut être alimenté d'une façon différente de celle dont est alimenté un autre groupe. Ainsi pour certains groupes le système de caisson sera employé, pour d'autres au contraire on maintiendra le système de tubes souples. En outre, dans chaque groupe, l'alimentation peut également être mixte.

La perturbation du jet principal a été décrite comme provenant de courants secondaires véhiculés par des conduites latérales 5 distinctes, radiales ou tangentielles. Il est également possible, d'obtenir des courants secondaires tangentiels en alimentant cycliquement non plus des conduites 5 séparées, mais comme montré sur la figure 6 toute une chambre 19 disposée en couronne autour de la tubulure principale 4, cette chambre 19 étant munie d'une pluralité d'ailettes ou aubes déflectrices 20. Les courants secondaires arrivant latéralement par rapport au jet principal dans la chambre 19, sont orientés par les aubes 20 et transformés en un tourbillon tangentiel au jet principal, tourbillon et jet principal interférant dans l'espace 21 à la sortie de la tubulure 4.

Cette alimentation latérale de la chambre 19 peut être cyclique et dans ce cas on obtient, lorsqu'elle est fournie, un jet résultant tournant qui s'évase à la sortie de l'espace 21, plus qu'en l'absence de ladite alimentation latérale.

L'alimentation latérale peut varier cycliquement en passant de tout à rien, mais il peut également s'agir d'une modulation cyclique de la pression, du débit, de la vitesse, du courant gazeux constituant cette alimentation latérale.

Il est également possible d'obtenir un jet dont l'impact sur le verre varie cycliquement en disposant sur le trajet du jet principal circulant dans la tubulure 4, comme montré figure 7, sur la paroi d'un tube 22 à l'intérieur de la tubulure 4, des obstacles inclinés en forme d'aubes 23.

Le gaz sous pression envoyé dans la tubulure principale 4, rencontre ces aubes 23, entre en tourbillon et s'évase à la sortie de la tubulure principale 4. Dans ce cas il n'est plus nécessaire de disposer d'un courant secondaire, seul la réaction du gaz du jet principal sur les obstacles produit la mise en tourbillon.

En faisant varier cycliquement la pression, vitesse et/ou débit du jet principal distribué dans la tubulure principale 4, on modifie l'allure du tourbillon et on fait ainsi varier cycliquement l'évasement du jet à la sortie de la tubulure 4.

Ainsi, sans mouvement mécanique, on obtient des jets de gaz de refroidissement dont l'impact sur le verre peut varier à vitesse élevée, ce qui permet d'augmenter le rendement de la trempe. Quand l'impact sur le verre varie, cela peut affecter la position de l'impact et/ou la surface de l'impact. Ceci peut s'appliquer en trempe horizontale ou verticale, et peut aussi se combiner avec les mouvements de l'art antérieur: oscillations, défilement du verre et/ou des caissons l'un par rapport à l'autre.

Grâce à la forme simple des buses — de simples tubes suffisent —, les coûts en matériel sont réduits.

Cette technique permet de fabriquer des vitrages fortement bombés, trempés, pour lesquels tout mouvement du verre et/ou des moyens de soufflage les uns par rapport aux autres est impossible du fait même de la forte courbure desdits vitrages.

Grâce à la délivrance de chaque jet de fluide de refroidissement par une seule buse, l'encombrement au voisinage du verre est réduit; il en résulte des possibilités importantes pour l'échappement du fluide de trempe après sa rencontre avec le verre, d'où un rendement de trempe élevé.

**Revendications**

1. Procédé de trempe de volumes de verre (1) à l'aide d'un fluide de refroidissement gazeux, notamment de l'air, distribué en jets, caractérisé en ce qu'on modifie cycliquement l'impact des jets sur le verre grâce à des perturbations auxquelles on soumet le fluide destiné à former chacun des jets qu'on veut modifier, ces perturbations intervenant en amont de la libération des jets.

2. Procédé selon la revendication 1, caractérisé en ce que ces perturbations sont constituées par au moins un courant gazeux secondaire de commande qui interfère avec le fluide de refroidissement destiné à former le jet sur lequel on veut agir et dont on modifie cycliquement l'interférence avec ledit fluide.

3. Procédé selon la revendication 2, caractérisé en ce que le courant gazeux secondaire de commande est un courant latérale par rapport au trajet du fluide de refroidissement, orienté tangentiellement par rapport audit trajet.

4. Procédé selon la revendication 2, caractérisé en ce que le courant gazeux secondaire de commande est un courant latéral par rapport au trajet du fluide de refroidissement, orienté radialement par rapport audit trajet.

5. Procédé selon l'une des revendications 3 ou 4, caractérisé en ce que plusieurs courants gazeux secondaires sont associés à chaque jet de fluide de refroidissement, ces courants gazeux secondaires intervenant individuellement les uns après les autres ou par groupe, les courants d'un même groupe agissant simultanément et les différents groupes intervenant les uns après les autres.

6. Procédé selon la revendication 1, caractérisé en ce qu'on crée les perturbations grâce à des obstacles que l'on dispose sur le trajet soit du jet principal de trempe lui-même, soit d'un courant gazeux secondaire arrivant latéralement et tangentiellement par rapport audit jet et interférant avec ledit jet, et en ce que simultanément on fait varier cycliquement les caractéristiques de pression, vitesse et/ou débit du jet ou du courant gazeux secondaire.

7. Dispositif pour la trempe de volumes de verre (1), à l'aide d'au moins une buse (2) soufflant sur le verre un jet d'un fluide de refroidissement gazeux tel que l'air, caractérisé en ce que cette buse (2) reçoit également en amont de l'orifice libérant le jet gazeux au moins une conduite latérale (5) radiale et/ou tangentielle alimentée par un courant gazeux qui varie cycliquement.

8. Dispositif selon la revendication 7, caractérisé en ce que quatre canalisations latérales (5) sont associées à chaque buse (2) de soufflage.

9. Dispositif selon l'une des revendications 7 ou 8, caractérisé en ce que l'alimentation de chaque conduite latérale (5) radiale ou tangentielle est assurée par une électro-vanne (24) pilotée par une came mise en action par un moteur.

10. Dispositif selon l'une des revendications 7 ou 8, caractérisé en ce que lorsque plusieurs buses de soufflage (2) sont prévues, toutes les canalisations latérales (5) devant être alimentées simultanément, le sont par l'intermédiaire d'un caisson (18) dont la pression varie cycliquement.

11. Dispositif selon la revendication 10, caractérisé en ce qu'il y a autant de caissons (18) en communication avec une série de conduites latérales (5) et dont la pression varie cycliquement, qu'il y a des séries desdites conduites destinées à fonctionner séparément et dans des conditions différentes.

12. Dispositif selon l'une des revendications 10 ou 11, caractérisé en ce que la pression dans un caisson (18) est reglée par une électro-vanne disposée sur son circuit d'alimentation, l'ouverture et la fermeture de l'électro-vanne étant pilotée par une came mue par un moteur.

13. Dispositif selon l'une des revendications 7, 9, 10, 11 ou 12, caractérisé en ce qu'un courant latéral interfère avec le jet principal de trempe après être entré dans une chambre (19) entourant le jet principal et s'être heurté à des aubes (20) disposées sur la paroi latérale de ladite chambre (19).

14. Dispositif selon l'une des revendications 7 à 13, caractérisé en ce que les conduites latérales (5) débouchent dans les portions finales rectilignes des tubulures (4) des buses de soufflage (2).

**Patentansprüche**

1. Verfahren zum Vorspannen von Glasscheiben

(1) mit Hilfe eines gasförmigen Kühlmittels, insbesondere Luft, in Form von Strahlen, dadurch gekennzeichnet, daß man zyklisch das Auftreffen der Strahlen auf das Glas mittels Störungen modifiziert, denen man das Strömungsmittel unterwirft, das jeden der Strahlen bilden soll, die man modifizieren will, wobei die Störungen stromaufwärts der Freigabe der Strahlen erfolgen.

2. Verfahren nach Anspruch 1, dadurch gekennzeichnet, daß die Störungen durch mindestens einen sekundären Steuergasstrom gebildet werden, der das Kühlmittel überlagert, das den Strahl bilden soll, auf den man einwirken will und von dem man zyklisch das Überlagern mit dem genannten Strömungsmittel modifiziert.

3. Verfahren nach Anspruch 2, dadurch gekennzeichnet, daß der sekundäre Steuergasstrom mit Bezug auf den Weg des Kühlströmungsmittels ein seitlicher Strom ist, der bezüglich des genannten Weges tangential orientiert ist.

4. Verfahren nach Anspruch 2, dadurch gekennzeichnet, daß der sekundäre Steuergasstrom mit Bezug auf den Weg des Kühlströmungsmittels ein seitlicher Strom ist, der bezüglich des genannten Weges radial orientiert ist.

5. Verfahren nach einem der Ansprüche 3 oder 4, dadurch gekennzeichnet, daß mehrere sekundäre Gasströme auf einen Kühlströmungsmittelstrahl vereinigt sind, wobei sich die sekundären Gasströme entweder einer nach dem anderen einzeln überlagern oder gruppenweise und die Ströme der gleichen Gruppe gleichzeitig einwirken und die unterschiedlichen Gruppen eine nach der anderen.

6. Verfahren nach Anspruch 1, dadurch gekennzeichnet, daß die Störungen durch Hindernisse erzeugt werden, die man auf dem Weg entweder des Hauptabschreckstrahles selbst oder der sekundären Gasströme anordnet, die seitlich und tangential mit Bezug auf den genannten Strahl ankommen und sich mit diesem überlagern und indem man gleichzeitig zyklisch die Eigenschaften des Druckes, der Geschwindigkeit und/oder der Durchsatzleistung des Strahles oder des sekundären Gasstromes variiert.

7. Vorrichtung zum Vorspannen von Glasscheiben (1) mit Hilfe mindestens einer Düse (2), die einen Kühlgasstrahl, wie Luft, auf das Glas bläst, dadurch gekennzeichnet, daß diese Düse (2) stromaufwärts der Öffnung, die den Gasstrahl freisetzt, mindestens eine radiale und/oder tangentiale Seitenleitung (5) aufweist, die mit einem Gasstrom gespeist wird, der zyklisch variiert.

8. Vorrichtung nach Anspruch 7, dadurch gekennzeichnet, daß jede Blasdüse (2) vier Seitenkanäle (5) aufweist.

9. Vorrichtung nach einem der Ansprüche 7 oder 8, dadurch gekennzeichnet, daß die Versorgung jeder radialen oder tangentialen Seitenleitung (5) durch ein Elektro- bzw. Magnetventil (24) sichergestellt ist, die durch eine Nockenscheibe gesteuert wird, die durch einen Motor betätigt wird.

10. Vorrichtung nach einem der Ansprüche 7 oder 8, dadurch gekennzeichnet, daß beim Verwenden mehrerer Blasdüsen (2) alle Seitenkanäle (5) gleichzeitig gespeist werden müssen, was mittels eines Druckbehälters (18) erfolgt, dessen Druck zyklisch variiert.

11. Vorrichtung nach Anspruch 10, dadurch gekennzeichnet, daß es ebensoviele Druckbehälter (18) in Verbindung mit einer Reihe von Seitenleitungen (5) gibt und deren Druck zyklisch variiert, wie es Reihen der genannten Leitungen gibt, die separat und mit unterschiedlichen Bedingungen arbeiten sollen.

12. Vorrichtung nach einem der Ansprüche 10 oder 11, dadurch gekennzeichnet, daß der Druck im Druckbehälter (18) durch ein Elektro- bzw. Magnetventil geregelt wird, das in seinem Versorgungskreis angeordnet ist, wobei das Öffnen und Schließen des Ventils durch eine Nockenscheibe gesteuert wird, die durch einen Motor angetrieben wird.

13. Vorrichtung nach einem der Ansprüche 7, 9, 10, 11 oder 12, dadurch gekennzeichnet, daß ein Seitenstrom sich mit dem Hauptabschreckstrahl überlagert, nachdem er in eine Kammer (19) eingetreten ist, die den Hauptstrahl umgibt und er auf Schaufeln (20) aufgeprallt ist, die auf der Seitenwand der genannten Kammer (19) angeordnet sind.

14. Vorrichtung nach einem der Ansprüche 1 bis 13, dadurch gekennzeichnet, daß die Seitenleitungen (5) in geradlinigen Endabschnitten von Rohrstutzen (4) der Blasdüsen (2) münden.

## Claims

1. A method of toughening bodies of glass (1) by means of a gaseous cooling fluid, notably air, distributed as jets, characterized in that the impact of the jets upon the glass is cyclically modified by perturbations to which the fluid intended for forming each of the jets which are to be modified is subjected, these perturbations taking place upstream of the release of the jets.

2. A method according to claim 1, characterized in that these perturbations are formed by at least one secondary control gas flow, which interferes with the cooling fluid intended for forming the jet on which it is desired to act, the interference of which controlled gas flow with said fluid is cyclically modified.

3. A method according to claim 2, characterized in that the secondary control gas flow is a lateral flow with respect to the path of the cooling fluid, orientated tangentially with respect to said path.

4. A method according to claim 2, characterized in that the secondary control gas flow is a lateral flow with respect to the path of the cooling fluid, orientated radially with respect to said path.

5. A method according to one of claims 3 or 4, characterized in that several secondary gas flows are associated with each jet of cooling fluid, these secondary gas flows occurring individually the ones after the others or as a group, the flows of a single group acting simultaneously and the different groups acting the ones after the others.

6. A method according to claim 1, characterized in that the perturbations are created by means of obstacles which are disposed on the path either of the principal toughening jet itself, or of a secondary gas flow arriving laterally and tangentially with respect to said jet and interfering with said jet, and in that simultaneously the characistics of pressure, velocity and/or flow rate of the jet or of the secondary gas flow are cyclically varied.

7. Apparatus for toughening bodies of glass (1) by means of at least one nozzle (2) blowing onto the glass a jet of a gaseous cooling fluid such as air, characterized in that said nozzle (2) also receives, upstream of the orifice releasing the gas jet, at least one radial and/or tangential lateral duct (/9) supplied with a gas flow which cyclically varies.

8. Apparatus according to claim 7, characterized in that four lateral ducts (5) are associated with each blowing nozzle (2).

9. Apparatus according to one of claims 7 or 8, characterized in that the feed to each radial or tangential lateral duct (5) is assured by an electrically operated valve (24) piloted by a cam operated by a motor.

10. Apparatus according to one of claims 7 or 8, characterized in that when several blowing nozzles (2) are provided, where all the lateral ducts (5) are to be supplied simultaneously, this is done by means of a chest (18), the pressure of which varies cyclically.

11. Apparatus according to claim 10, characterized in that there are as many chests (18) in communication with a series of lateral ducts (5) and of which the pressure cyclically varies, as there are series of said ducts intended for operating separately and under different conditions.

12. Apparatus according to one of claims 10 or 11, characterized in that the pressure in a chest (18) is regulated by an electrically operated valve disposed in its supply circuit, the opening and closing of the electrically operated valve being piloted by a cam operated by a motor.

13. Apparatus according to one of claims 7, 9, 10, 11 or 12, characterized in that a lateral flow interferes with the principal toughening jet after having entered a chamber (19) surrounding the principal jet and having struck blades (20) disposed on the lateral wall of said chamber (19).

14. Apparatus according to one of claims 7 to 13, characterized in that the lateral ducts (5) lead into the final, straight portions of the pipes (4) of the blowing nozzles (2).

FIG. 1

FIG. 2A

FIG. 2B

FIG. 2C

FIG. 3A

FIG. 3B

FIG. 3C

FIG.4

FIG.5

FIG_6

FIG_7